(19) Europäisches Patentamt
European Patent Office
Office européen des brevets

(11) **EP 2 493 250 A1**

(12) **EUROPEAN PATENT APPLICATION**

(43) Date of publication:
**29.08.2012 Bulletin 2012/35**

(51) Int Cl.:
*H04W 52/02* (2009.01)

(21) Application number: **11290107.9**

(22) Date of filing: **28.02.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Santos, André**
**70197 Stuttgart (DE)**

• **Doetsch, Uwe**
**74392 Freudenthal (DE)**

(74) Representative: **Richardt Patentanwälte GbR**
**Wilhelmstraße 7**
**65185 Wiesbaden (DE)**

Remarks:
Amended claims in accordance with Rule 137(2) EPC.

(54) **Selecting a transmission mode of a network entity in a wireless telecommunication network**

(57)    The invention relates to a method for selecting a transmission mode of a first network entity (100; 401) in a wireless telecommunication network, wherein the method comprises the following steps:
- selecting (S1) a first transmission mode for transmitting data to a second network entity (102; 104; 106; 400);
- determining (S2) by the first network entity (100; 401) a first power consumption indicator, the first power consumption indicator being indicative of an amount of power required by the first network entity (100; 401) for data processing and data transmission by using the first transmission mode; and

sending (S3) a first signal from the first network entity (100; 401) to the second network entity (102; 104; 106; 400), the first signal being indicative of the first power consumption indicator.

Fig. 1

EP 2 493 250 A1

## Description

### Field of the invention

The invention relates to the field of selecting a transmission mode of a network entity in a wireless telecommunication network.

### Background and related art

Energy efficient or green communication has become an important requirement for current and future wireless telecommunication networks. The carbon footprint and the considerable energy costs that carriers are currently spending motivate a paradigm shift towards energy efficient design of wireless telecommunication networks. Contrary to current systems, where the target is capacity maximization, the energy consumption of the whole network now becomes an important parameter to be taken into account. With the role of the minimization of the energy consumption of the network, we are proposing here further signaling between network nodes in order to allow flexible adaptation of the network.

### Summary

It is an object of the present invention to provide an improved method for selecting a transmission mode of a network entity, an improved method for receiving power consumption information from a network entity, an improved mobile device, an improved base station apparatus, and an improved computer-readable storage medium.

This object is achieved by the methods, the mobile device, the base station apparatus, and the computer-readable storage medium according to the independent claims. Embodiments of the invention are given in the dependent claims.

The invention relates to a method for selecting a transmission mode of a first network entity in a wireless telecommunication network. A first transmission mode is selected for transmitting data to a second network entity. This selection may be performed by the first network entity or by a second network entity. When the second network entity selects the transmission mode a signal is transmitted to the first network entity, wherein this signal is indicative of the transmission mode to be used.

The first network entity may for example be a base station. In this case the second network entity is a central network element such as an operation and maintenance center, a mobile switching center, or an authentication center.

An embodiment of the invention with several base stations as first network entities and a central network entity as second network entity is especially advantageous for cloud processing. In this case the base stations are served by the central network entity and the base stations process signals and data. By selecting a proper transmission mode, the total power consumption in the cloud is minimized.

The first network entity can also be alternatively a mobile device. In this case the second network entity may be a base station or another mobile device. A mobile device may in this case be a PDA, portable computer, a smartphone, or a mobile phone.

After having selected the first transmission mode the first network entity determines a first power consumption indicator. The first power consumption indicator is indicative of an amount of power required by the first network entity for data processing and data transmission by using the first transmission mode. For example if the first network entity is a mobile device and the second network entity is a base station the mobile device determines its power consumption when using the first transmission mode for transmitting data to the base station. The power consumption indicator is indicative of the power required by the first network entity for data processing and data transmission. In other words, when using a first transmission mode that requires a high power amount used by the mobile device for data processing, this high power amount required for data processing is considered by the first power consumption indicator.

A first signal is sent from the first network entity to the second network entity. The first signal is indicative of the first power consumption indicator. Hence, the second network entity is provided with information about the power consumption of the first network entity.

Embodiments of the invention are advantageous because the second network entity is provided with information about the power consumption of the first network entity. Hence, the second network entity can adjust the first transmission mode for saving power or change the transmission mode for transmitting data from the first network entity to the second network entity. By changing the transmission mode the power consumed by the first network entity may be reduced because of less power being required for data processing and data transmission.

According to embodiments of the invention a second transmission mode is selected for the first network entity for transmitting data to the second network entity. The first network entity determines a second power consumption indicator that is indicative for an amount of power required by the first network entity for data processing and data transmission by using the second transmission mode. Then, a second signal is transmitted from the first network entity to the second network entity. The second signal is indicative of the second power consumption indicator. The second network entity stores the first and the second power consumption indicator in a database. The second network entity uses the database for determining a data transmission mode with the lowest power consumption indicator of the first network entity. In other words, the second network entity is adapted to determine the data transmission mode with the lowest power consumption for the first network entity. This is advantageous for decreasing power consumption of the first network entity.

Embodiments of the invention are advantageous because the first network entity can be of various classes or types. For example when the first network entity is a mobile device the power consumption depends on the class of mobile device (PDA, mobile computer, smartphone, mobile phone) and also the producer of the mobile device and maybe even of the model of the mobile device. For example a first model of a first producer of a mobile device may consume less power with the first transmission mode while a second model of the same producer may consume less power with the second transmission mode.

According to embodiments of the invention the first and/or the second power consumption indicator is transmitted from the second network entity to a third network entity during or before a handover procedure involving the first, the second and the third network entity. For example if the first network entity is a mobile device and the second network entity is a base station the third network entity is also a base station. In this case a handover is performed for the mobile device from a source base station to a target base station. Herein the source base station corresponds to the second network entity and the target base station corresponds to the third network entity.

According to embodiments of the invention the first signal is further indicative of an identification of the first network entity. The identification is an entity class (e.g. laptop, mobile phone, smart phone, etc.), and/or an entity brand (e.g. Apple, Nokia, Samsung, HTC, etc.), and/or an entity name (e.g. Apple iPhone, Nokia C7, Samsung S8000, HTC Desire, etc.), and/or an international mobile equipment identity (IMEI).

Embodiments of the invention are advantageous because the second network entity stores information about the power consumption of the first network entity. This information is transmitted during or before a handover procedure to a third network entity. Hence, also the third network entity is provided with information about the power consumption of the first network entity without a signal being transmitted from the first network entity to the third network entity. Every power consumption indicator may be stored in the database of the second network entity and also in the database of the third network entity. When the first signal is further indicative of the identification of the first network entity also this information can be stored in the database of the second network entity. This information can also be transmitted together with the second signal to the third network entity. In this case, the information can also be stored in the database of the third network entity.

Embodiments of the invention are further advantageous because information in the database is linked to certain entity classes, and/or certain entity producers, and/or certain entity names. In this case the second and the third network entity can determine the power consumed by the first network entity by knowing the entity class, the entity producer, and/or the entity name. When the information in the database of the second and/or the third network entity is linked to an international mobile equipment identity the power consumed by a mobile device can be determined directly for this mobile device only, because the IMEI is unique worldwide.

In another aspect the invention relates to a method for receiving power consumption information from a first network entity by a second network entity. The method is performed by the second network entity and comprises receiving data from the first network entity. The data is transmitted by using a first transmission mode. A first signal is received from the first network entity. The first signal is indicative of a first power consumption indicator. The first power consumption indicator is indicative of an amount of power required by the first network entity for data processing and data transmission by using the first transmission mode.

In yet another aspect the invention relates to a mobile device. The mobile device comprises means for selecting a first transmission mode for the mobile device for transmitting data to a base station. The selection of the first transmission mode may be triggered by receiving a signal from a second network entity such as the base station.

Further, the mobile device comprises means for determining a first power consumption indicator. The first power consumption indicator is indicative of an amount of power required by the mobile device for data processing and data transmission by using the first transmission mode. The mobile device further comprises means for sending a first signal to the base station. The first signal is indicative of the first power consumption indicator.

In another aspect the invention relates to a base station apparatus. The base station apparatus comprises means for receiving data from a mobile device. The data is transmitted by using a first transmission mode. The base station apparatus further comprises means for receiving a first signal from the mobile device. The first signal is indicative of a first power consumption indicator. The first power consumption indicator is indicative of an amount of power required by the mobile device for data processing and data transmission by using the first transmission mode.

In yet another aspect the invention relates to a computer-readable storage medium comprising instructions. The instructions are executable by a processor and cause the processor to perform a method according to embodiments of the invention.

**Brief description of the drawings**

In the following embodiments of the invention are explained in greater detail, by way of example only, making reference to the drawings in which:

Fig. 1 is a schematic view on an exemplary embodiment of the invention comprising a mobile device and three base stations,

Fig. 2 is a schematic graph of the power consumption indicators of five dif-ferent transmission modes,

Fig. 3 is a flow diagram of a method according to embodiments of the inven-tion,

Fig. 4 is a block diagram of a mobile device and a base station according to embodiments of the invention.

**Detailed description**

Like numbered elements in these Figs. are either identical elements or perform the same function. Elements which have been discussed previously will not necessarily be discussed in later Figs. if the function is identical.

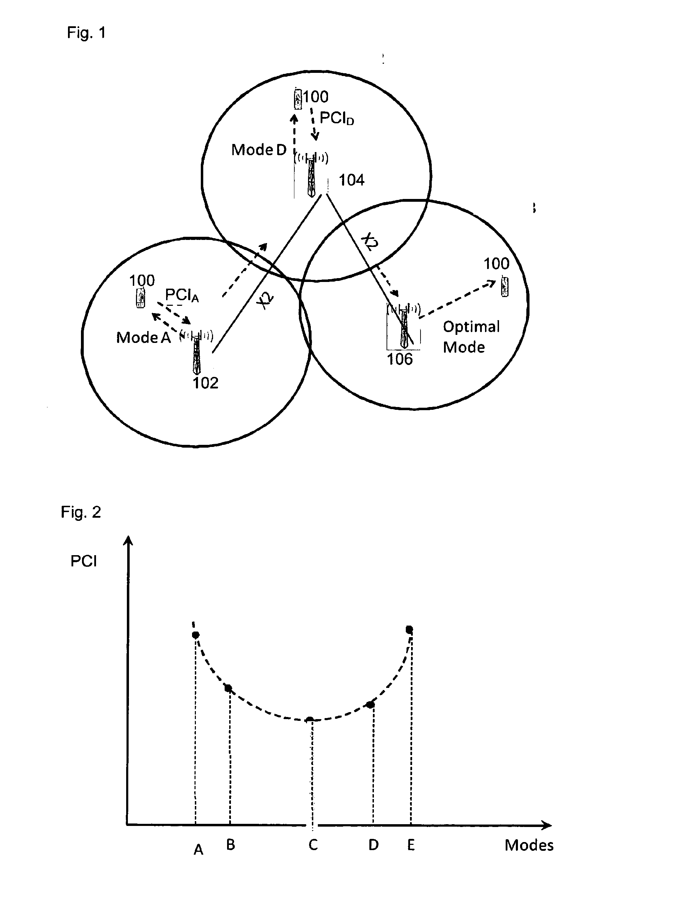

Fig. 1 is a schematic view of a wireless telecommunication network comprising three cells. The three cells are each served by one base station. It is to be noted that the wireless telecommunication network may comprise more than three cells and more than three base stations. It is also to be noted that one base station may serve more than one cell. A mobile device 100 is moved through the three cells served by base stations 102, 104 and 106. The three base stations 102, 104 and 106 are connected to each other via an X2 interface. Although there is no connection depicted in Fig. 1 between base station 102 and base station 106 there may be the same connection as between base stations 102 and 104 and between base stations 104 and 106.

The first base station 102 transmits a first signal to the mobile device 100 being located in the cell served by the first base station 102. The first signal is indicative of using a first transmission mode A for transmitting data to the first base station 102 by the mobile device 100.

The mobile device 100 then uses the first transmission mode A for transmitting data to the first base station 102 and for signal processing. The power consumed by the mobile device 100 for data transmission and data processing is measured by the mobile device 100. The mobile device 100 then transmits a second signal to the first base station 102. The second signal is indicative of a power consumption indicator (PCI) for the first transmission mode A.

The PCI may be a percentage value, a watts value or a range of the consumed power. The range may for example be a low, middle or high power level consumption. It is to be noted that also more than three ranges are possible. The more regions are used the more exact is the power consumption indicator. The percentage value could be a percentage of the maximum power required by the mobile device for signal processing and data transmission. The watts value is the absolute value in watts of the consumed power for signal processing and signal transmission.

The transmission mode A is defined as all transmission modes by a bandwidth, a modulation scheme, a coding scheme and/or a number of antennas to be used by the mobile device and/or by the base station 102.

The mobile device 100 is then moved into the second cell being served by the second base station 104. During or before the handover procedure from the first base station 102 to the second base station 104 the PCI for the first transmission mode A is transmitted from the first base station 102 to the second base station 104. Hence, the second base station 104 knows how much power is required by the mobile device 100 for signal processing and signal transmission in transmission mode A.

The second base station 104 then sets a second transmission mode D for signal processing and signal transmission by the mobile device 100. The mobile device 100 then uses the transmission mode D for signal processing and signal transmissions. The mobile device 100 measures the power required for signal processing and signal transmission when using transmission mode D. A power consumption indicator for transmission mode D (PCI$^d$) is then transmitted from the mobile device 100 to the second base station 104. The PCI$^d$ indicates how much power is required by the mobile device 100 for signal transmission and signal processing when using transmission mode D. Hence, the second base station 104 stores now information about the power consumption of the mobile device 100 for transmission modes A and D.

The mobile device 100 is then moved into the third cell being served by the third base station 106. During or before the handover from the second base station 104 to the third base station 106 PCIs for the transmission modes A and D are transmitted from the second base station 104 to the third base station 106. Hence, the third base station 106 stores also information about the power consumption of the mobile device 100 when using transmission modes A and D. The third base station 106 now may calculate an optimal transmission mode for mobile device 100. The optimal transmission mode may be transmission mode A or transmission mode B or another transmission mode.

It is possible for the third base station 106 to determine that another transmission mode may be better than transmission modes A or D. This is explained in more detail with respect to Fig. 2.

Fig. 2 is a graph for five different transmission modes A-E. The graph represents on the γ-axis the power consumption indicator. The power consumption indicator indicates the power consumed by the mobile device when using the respective transmission mode for signal processing and signal transmission.

In order to simplify the explanation, it is assumed without loss of generality the following simplifications:

- Interference is not taken into account, since this is not relevant for the issue investigated here; and
- for every possible transmission mode, some perfect coding is assumed in such a way that the rate provided to the user is equal to Shannon capacity:

$$C = W \log_2\left(1 + \frac{P_{rec}}{N_0 W}\right) \tag{1}$$

where $P_{rec}$ is the received power (i.e. the transmitted power and the channel attenuation are taken into account), $N_0$ is the noise power spectral density, $W$ is the bandwidth and $C$ is the Capacity.

If we assume that there is no limitation on the transmitted power, one can fix the relation bandwidth and power in such a way that the rate $C$ is kept fixed:

$$\tag{2} P = \frac{\left(2^{C/W} - 1\right) N_0 W}{a^2}$$

where $a$ is the attenuation due to the channel.

Therefore, the transmission modes could be defined on different bandwidths. As consequence the transmitted power is defined by (2). We assume then that a transmission to a user could be performed using the following 5 modes:

| Mode | Tx Bandwidth |
|------|--------------|
| A | $W_{max}/5$ |
| B | $2W_{max}/5$ |
| C | $3W_{max}/5$ |
| D | $4W_{max}/5$ |
| E | $5W_{max}/5$ |

Figure 2 depicts one instance of the probed modes in the third base station 106. The PCI of the modes A and D have been received via backhaul X2. The PCIs of the modes B and E have already been stored previously on a data storage medium of the third base station 106. This may have been performed by storing the PCIs together with information about the mobile device having measured these PCIs The information may for example be the IMEI or a name for the mobile device or a type of the mobile device. The third base station 106 is adapted to determine that the mobile station 100 would also measure the same PCIs for the modes B and E, e.g. because the mobile device 100 had already been connected to the third base station 106 previously and the modes B and E had been used by the mobile device for data processing and data transmission.

The missing mode C can then be easily interpolated. Finally, it is realized that mode C is the optimum solution in terms of energy consumption. The behavior of the curve in Figure 2 can be justified as follows: according to (1) the minimum transmitted energy can be reached when the maximum bandwidth is employed (i.e. mode E). However, as the bandwidth is increased, the energy consumption of the signal processing of the device is consequently raised. Therefore, a trade-off between maximum and minimum bandwidth (mode C) is found to be the optimum point of operation.

Note that the example just presented shows how the network can probe the energy consumption profile of a terminal. However, the methodology presented here can be also applied to other network elements such as base stations when it is necessary and worthwhile.

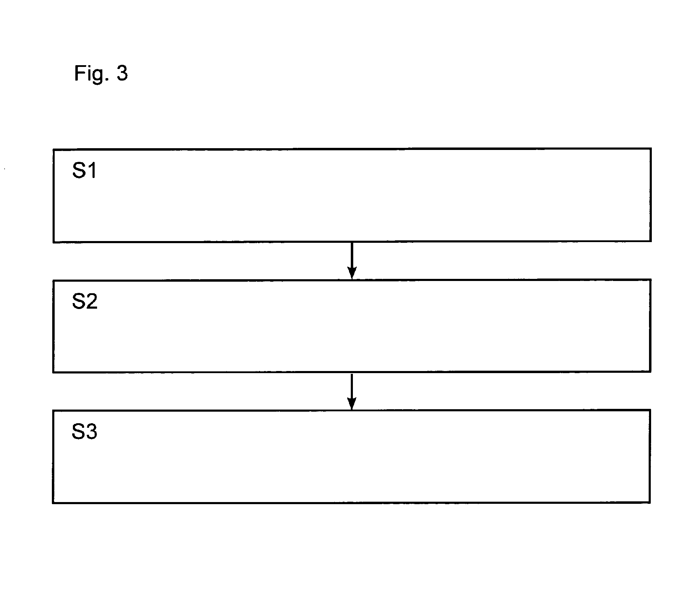

Fig. 3 is a flow diagram of a method for selecting a transmission mode for a mobile device. In step S1 a first transmission mode is selected for transmitting data to the base station. A first signal is transmitted to the mobile device from the base station. The first signal is indicative for the mobile device to use the first transmission mode. The first transmission mode is for example characterized by a bandwidth, a modulation scheme, and/or a coding scheme. Depending on the class of mobile device the power required for signal transmission and signal processing for different transmission modes varies.

When using the first transmission mode for data transmission and data processing the mobile device determines in step S2 a first power consumption indicator. The first power consumption indicator indicates an amount of power required by the mobile device for data processing and data transmission by using the first transmission mode.

In a third step S3 the mobile device sends a signal to the base station. The signal is indicative of the first power consumption indicator. The base station stores this power consumption indicator for being able to use it for future transmission mode selections or for transmitting it to a neighboring base station.

The base station may also store information about the mobile device having used the first transmission mode. For example the information about the mobile device may be the IMEI. In this case the base station recognizes the mobile device when the mobile device is connected again to the base station. Then, the base station knows about the power consumption of the mobile device when using the first transmission mode. Alternatively the class of mobile device, e.g. laptop, mobile phone, PDA or smartphone, may be stored as information about the mobile device. Another alternative is to store the name of the mobile device such as Apple iPhone, Nokia C7 and so on. In this case the information can be used for any similar mobile device. For example every Apple iPhone will require the same power for signal transmission and signal processing when using the same transmission mode.

By this method the base station learns about the power consumption of mobile devices connected to the base station. Consequently the base station selects for future connections with mobile devices transmission modes that save power. This is advantageous for the environment because not so much electrical power is consumed. Another big advantage is for the user that the battery of the mobile device allows a longer standby and data transmission time.

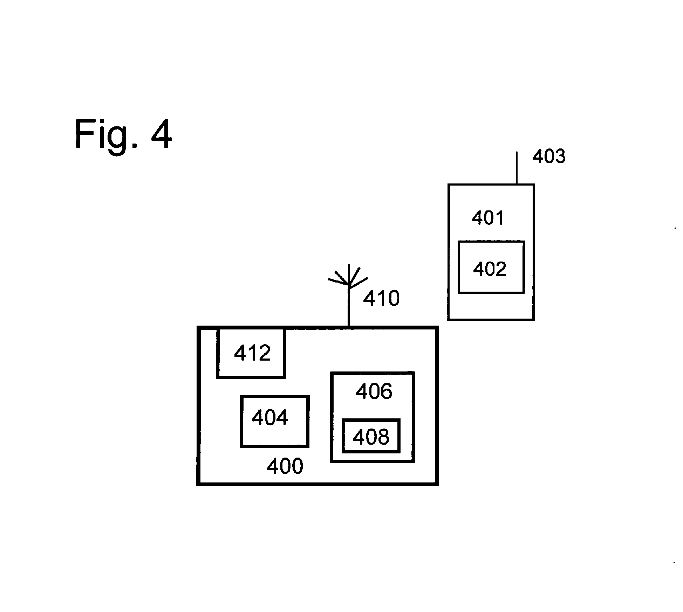

Fig. 4 is a block diagram of a base station 400. The base station 400 comprises a processor 404, a computer-readable storage medium 406, an antenna 410 and an X2 interface 412.

The X2 interface may be used for communication with neighboring base stations for exchanging information. Information about the power consumption of mobile devices may for example be exchanged via the X2 interface 412 during or before a handover of a mobile device from or to the base station 400. The antenna 410 is used for communication with a mobile device. The processor 404 is adapted to execute the program instructions 408 stored in the storage medium 406. The program instructions 408 cause the processor to perform a method according to embodiments of the invention.

When executing the program instructions 408 the processor 404 receives data from a mobile device via antenna 410. The data is transmitted by using a first transmission mode. Also via antenna 410 a first signal is received from the mobile device by the processor 404. The first signal is indicative of a power consumption indicator. The power consumption indicator indicates an amount of power required by the mobile device for data processing and data transmission by using the first transmission mode.

The processor 404 is further adapted to determine an optimal transmission mode for the mobile device being connected to the base station 400. For example this may be performed by comparing information about the mobile device stored in the storage medium 406. The information may be received directly from the mobile device or via the X2 interface 412 from a neighboring base station.

The information is indicative of at least one power consumption indicator for at least one transmission mode used by the mobile device. Preferably the information is indicative of several power consumption indicators or several transmission modes. In this case the processor 404 can determine an optimal transmission mode for the mobile device. This may be performed by comparing the different power consumption indicators stored in the data storage 406 or by determining another transmission mode as explained above.

Fig. 4 further shows a mobile device 401 comprising a processor 402 and an antenna 403. The mobile device 401 is adapted to communicate with the base station 400 via antennas 403 and 410. Further, the processor 402 of the mobile device 401 is adapted to determine the power required by the mobile device 401 for data processing and data transmission using a transmission mode, wherein the transmission mode is selected by the processor 402. The processor 402 may for example select the transmission mode after having received a signal from the base station 400, wherein the signal is indicative of the transmission mode to be used by the mobile device 401.

The processor 402 is further adapted to send a signal to the base station 400 via antennas 403 and 410, wherein this signal is indicative of a power consumption indicator. The power consumption indicator is determined by the processor 402 and is indicative of the power being required by the mobile device 401 for data processing and data transmission by using the transmission mode selected by the processor 402.

List of reference numerals

| 100 | Mobile device |
| 102 | Base station |
| 104 | Base station |
| 106 | Base station |
| 400 | Base station |
| 404 | Processor |
| 406 | Computer-readable storage medium |
| 408 | Program instructions |
| 410 | Antenna |
| 412 | X2 interface |

**Claims**

1. A method for selecting a transmission mode of a first network entity (100; 401) in a wireless telecommunication network, wherein the method comprises the following steps:

   - selecting (S1) a first transmission mode for transmitting data to a second network entity (102; 104; 106; 400);
   - determining (S2) by the first network entity (100; 401) a first power consumption indicator, the first power consumption indicator being indicative of an amount of power required by the first network entity (100; 401) for data processing and data transmission by using the first transmission mode; and
   - sending (S3) a first signal from the first network entity (100; 401) to the second network entity (102; 104; 106; 400), the first signal being indicative of the first power consumption indicator.

2. Method according to claim 1, wherein the first network entity (100; 401) is a base station and the second network entity (102; 104; 106; 400) is a central network element.

3. Method according to claim 1, wherein the first network entity (100; 401) is a mobile device and the second network entity (102; 104; 106; 400) is a base station.

4. Method according to any one of the preceding claims, wherein the method further comprises the following steps:

   - selecting a second transmission mode for the first network entity (100; 401) for transmitting data to the second network entity (102; 104; 106; 400);
   - determining by the first network entity (100; 401) a second power consumption indicator, the second power consumption indicator being indicative for an amount of power required by the first network entity (100; 401) for data processing and data transmission by using the second transmission mode; and
   - sending a second signal from the first network entity (100; 401) to the second network entity (102; 104; 106; 400), the second signal being indicative of the second power consumption indicator;
   - storing the first and the second power consumption indicator in a database of the second network entity (102; 104; 106; 400), wherein the second network entity (102; 104; 106; 400) uses the database for determining a data transmission mode with the lowest power consumption indicator.

5. Method according to any one of the preceding claims, wherein the first and/or the second power consumption indicator is transmitted from the second network entity (102; 104; 106; 400) to a third network entity during or before a handover procedure involving the first, the second and the third network entity.

6. Method according to any one of the preceding claims, wherein the first signal is further indicative of an identification of the first network entity, and wherein the identification is an entity class, and/or an entity producer, and/or an entity name, and/or an International Mobile Equipment Identity.

7. A method for receiving power consumption information from a first network entity (100; 401) by a second network entity (102; 104; 106; 400), wherein the method is performed by the second network entity (102; 104; 106; 400) and comprises the following steps:

   - receiving (S2) data from the first network entity, wherein the data is transmitted by using a first transmission mode; and
   - receiving (S3) a first signal from the first network entity, the first signal being indicative of a first power consumption indicator, the first power consumption indicator being indicative of an amount of power required by the first network entity (100; 401) for data processing and data transmission by using the first transmission mode.

8. A mobile device (100; 401), the mobile device comprising:

   - means (402) for selecting a first transmission mode for the mobile device for transmitting data to a base station (102; 104; 106; 400);
   - means (402) for determining a first power consumption indicator, the first power consumption indicator being indicative of an amount of power required by the mobile device for data processing and data transmission by using the first transmission mode; and
   - means (402; 403) for sending a first signal device to the base station, the first signal being indicative of the first power consumption indicator.

9. A base station apparatus (102; 104; 106; 400), the base station apparatus comprising:

   - means (410) for receiving data from a mobile device (100; 401), wherein the data is transmitted by using a first transmission mode; and
   - means (410) for receiving a first signal from the mobile device, the first signal being indicative of a first power consumption indicator, the first power consumption indicator being indicative of an amount of power required by the mobile device for data processing and data transmission by using the first transmission mode.

10. A computer-readable storage medium (406) comprising instructions (408), wherein the instructions are executable by a processor (404) and cause the processor to perform a method according to any one of the claims 1-7.

**Amended claims in accordance with Rule 137(2) EPC.**

1. A method for selecting a transmission mode of a first network entity (100; 401) in a wireless telecommunication network, wherein the method comprises the following steps:

   - selecting (S1) a first transmission mode for transmitting data to a second network entity (102; 104; 106; 400);
   - determining (S2) by the first network entity (100; 401) a first power consumption indicator, the first power consumption indicator being indicative of an amount of power required by the first network entity (100; 401) for data processing and data transmission by using the first transmission mode;
   - sending (S3) a first signal from the first network entity (100; 401) to the second network entity (102; 104; 106; 400), the first signal being indicative of the first power consumption indicator;
   - selecting a second transmission mode for the first network entity (100; 401) for transmitting data to the second network entity (102; 104; 106; 400);
   - determining by the first network entity (100; 401) a second power consumption indicator, the second power consumption indicator being indicative for an amount of power required by the first network entity (100; 401) for data processing and data transmission by using the second transmission mode; and
   - sending a second signal from the first network entity (100; 401) to the second network entity (102; 104; 108; 400), the second signal being indicative of the second power consumption indicator.

2. Method according to claim 1, wherein the first network entity (100; 401) is a base station and the second network entity (102; 104; 108; 400) is a central network element.

3. Method according to claim 1, wherein the first network entity (100; 401) is a mobile device and the second network entity (102; 104; 108; 400) is a base station.

**4.**

**5.** Method according to any one of the preceding claims, wherein the first and/or the second power consumption indicator is transmitted from the second network entity (102; 104; 106; 400) to a third network entity during or before a handover procedure involving the first, the second and the third network entity.

**6.** Method according to any one of the preceding claims, wherein the first signal is further indicative of an identification of the first network entity, and wherein the identification is an entity class, and/or an entity producer, and/or an entity name, and/or an International Mobile Equipment Identity.

**7.** A method for receiving power consumption information from a first network entity (100; 401) by a second network entity (102; 104; 108; 400), wherein the method is performed by the second network entity (102; 104; 106; 400) and comprises the following steps:

- receiving (S2) data from the first network entity, wherein the data is transmitted by using a first transmission mode; and
- receiving (S3) a first signal from the first network entity, the first signal being indicative of a first power consumption indicator, the first power consumption indicator being indicative of an amount of power required by the first network entity (100; 401) for data processing and data transmission by using the first transmission mode
- selecting a second transmission mode for the first network entity (100; 401) for transmitting data to the second network entity (102; 104; 106; 400);
- receiving a second power consumption indicator, the second power consumption indicator being indicative for an amount of power required by the first network entity (100; 401) for data processing and data transmission by using the second transmission mode; and
- storing the first and the second power consumption indicator in a database of the second network entity (102; 104; 105; 400), wherein the second network entity (102; 104; 106; 400) uses the database for determining a data transmission mode with the lowest power consumption indicator.

**8.** A mobile device (100; 401), the mobile device comprising:

- means (402) for selecting a first transmission mode for the mobile device (100; 401) for transmitting data to a base station (102; 104; 106; 400);
- means (402) for determining a first power consumption indicator, the first power consumption indicator being indicative of an amount of power required by the mobile device (100; 401) for data processing and data transmission by using the first transmission mode; and
- means (402; 403) for sending a first signal device to the base station (102; 104; 106; 400), the first signal being indicative of the first power consumption indicator
- means for selecting a second transmission mode for the mobile device (100; 401) for transmitting data to the base station (102; 104; 106; 400);
- means for determining a second power consumption indicator, the second power consumption indicator being indicative for an amount of power required by the mobile device (100; 401) for data processing and data transmission by using the second transmission mode; and
- means for sending a second signal to the base station (102; 104; 106; 400), the second signal being indicative of the second power consumption indicator.

**9.** A base station apparatus (102; 104; 106; 400), the base station apparatus comprising:

- means (410) for receiving data from a mobile device (100; 401), wherein the data is transmitted by using a first transmission mode; and
- means (410) for receiving a first signal from the mobile device, the first signal being indicative of a first power consumption indicator, the first power consumption indicator being indicative of an amount of power required by the mobile device for data processing and data transmission by using the first transmission mode
- means for selecting a second transmission mode for the mobile device (100; 401) for transmitting data to the base station (102; 104; 106; 400);
- means for receiving a second power consumption indicator, the second power consumption indicator being indicative for an amount of power required by the mobile device (100; 401) for data processing and data transmission by using the second transmission mode; and
- means for storing the first and the second power consumption indicator in a database of the base station (102; 104; 108; 400), wherein the base station (102; 104; 106; 400) is adapted to use the database for determining a data transmission mode with the lowest power consumption indicator.

**10.** A computer-readable storage medium (406) comprising instructions (408), wherein the instructions are executable by a processor (404) and cause the processor to perform a method according to any one of the claims 1-6.

Fig. 1

Fig. 2

Fig. 3

```
┌─────────────────────────────────────────────┐
│ S1                                           │
│                                              │
│                                              │
└─────────────────────────────────────────────┘
                        │
                        ▼
┌─────────────────────────────────────────────┐
│ S2                                           │
│                                              │
│                                              │
└─────────────────────────────────────────────┘
                        │
                        ▼
┌─────────────────────────────────────────────┐
│ S3                                           │
│                                              │
│                                              │
└─────────────────────────────────────────────┘
```

# Fig. 4

**EP 2 493 250 A1**

**EUROPEAN SEARCH REPORT**

Application Number

EP 11 29 0107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/284449 A1 (DE VECIANA GUSTAVO [US] ET AL) 11 November 2010 (2010-11-11)<br>* abstract *<br>* figures 1-5 *<br>* paragraph [0015] - paragraph [0027] *<br>* paragraph [0028] - paragraph [0037] *<br>* paragraph [0038] - paragraph [0060] *<br>----- | 1-10 | INV.<br>H04W52/02 |
| X | US 2009/010274 A1 (KOSKAN PATRICK D [US]) 8 January 2009 (2009-01-08)<br>* the whole document *<br>----- | 1-10 | |
| A | EP 1 473 885 A1 (MOTOROLA INC [US]) 3 November 2004 (2004-11-03)<br>* the whole document *<br>----- | 1-10 | |
| A | WO 2009/100764 A1 (INFINEON TECHNOLOGIES AG [DE]; MARTIN HANS [DE]; CHOI HYUNG-NAM [DE];) 20 August 2009 (2009-08-20)<br>* the whole document *<br>----- | 1-10 | |
| | | | **TECHNICAL FIELDS SEARCHED (IPC)**<br><br>H04W |

The present search report has been drawn up for all claims

| Place of search | Date of completion of the search | Examiner |
|---|---|---|
| The Hague | 4 August 2011 | Niederholz, Jürgen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

**ANNEX TO THE EUROPEAN SEARCH REPORT
ON EUROPEAN PATENT APPLICATION NO.**                    EP 11 29 0107

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2011

| Patent document cited in search report | | | Publication date | Patent family member(s) | | | Publication date |
|---|---|---|---|---|---|---|---|
| US 2010284449 | A1 | | 11-11-2010 | NONE | | | |
| US 2009010274 | A1 | | 08-01-2009 | NONE | | | |
| EP 1473885 | A1 | | 03-11-2004 | CN | 1781289 | A | 31-05-2006 |
| | | | | WO | 2004098132 | A1 | 11-11-2004 |
| | | | | JP | 2006524945 | A | 02-11-2006 |
| | | | | US | 2006205443 | A1 | 14-09-2006 |
| WO 2009100764 | A1 | | 20-08-2009 | CN | 101946470 | A | 12-01-2011 |
| | | | | DE | 112008003708 | T5 | 23-12-2010 |
| | | | | US | 2011051643 | A1 | 03-03-2011 |

EPO FORM P0459

For more details about this annex : see Official Journal of the European Patent Office, No. 12/82